# EUROPEAN PATENT APPLICATION

(11) **EP 3 157 175 A1**
(43) Date of publication of application: **19.04.2017**
(21) Application number: 14884366.7
(22) Date of filing: 11.08.2014
(51) Int. Cl.: H04B 5/02

(54) **VOICE DATA TRANSMISSION PROCESSING METHOD, TERMINAL, AND COMPUTER STORAGE MEDIUM**

(30) Priority: 16.06.2014 CN 201410267225
(71) Applicant: ZTE Corporation, Shenzhen, Guangdong 518057 (CN)
(72) Inventor: SHI, Zuyong, Shenzhen Guangdong 518057 (CN); WAN, Chao, Shenzhen Guangdong 518057 (CN)
(74) Representative: Studio Torta S.p.A.
(86) International application number: PCT/CN2014/084130
(87) International publication number: WO 2015/131490

(57) **Abstract**

The present invention is applied in the field of communications. Provided are a voice data transmission processing method and a terminal. The received voice data transmission processing method of the present invention specifically comprises: a terminal receiving an instruction sent by a terminal accessory by means of wireless near field communication; and after a voice data transmission operation corresponding to the instruction in a currently running application is determined, implementing voice data transmission between the terminal and the terminal accessory according to the voice data transmission operation. In the method of the present invention, voice data transmission is controlled by using a terminal accessory, and a user can implement voice transmission without performing any operation on a terminal, thereby helping the user conveniently use a voice service of an application of the terminal and improving the user experience. Also disclosed is a computer storage medium.

## Description

### TECHNICAL FIELD

The present disclosure relates to the field of communication technologies, and more particularly, to a voice data transmission processing method, a terminal and a computer storage medium.

### BACKGROUND

With the continuous development of internet technology, as well as the trend of replacing IPV4 by IPV6, life becomes more and more colorful. The emergence of new technologies also brings a plurality of new opportunities and challenges. The emergence of a 4G mobile phone accelerates the pace of implementing the internet. It is well-known that mobile phones have entered the life of people. The mobile phone has more practical functions; moreover, new functions are constantly improved and added.

The rapid development of network and mobile communications contributes the daily increasing on the demand for various data sources and network services outside the computer. The requirements on the wireless near field transmission and control are getting higher and higher. For example, Bluetooth as a global open standard for wireless applications enables people to achieve voice and data information exchange and transmission within an individual area anytime and anywhere by means of connecting data and voice in the network through a wireless link, thus implementing fast and flexible communications. Voice is used by people in more and more occasions, while the voice input or output is controlled using a terminal in many cases when using voice. For example, when people use WeChat, a voice input key of WeChat needs to be pressed for voice input. If the mobile phone is kept from a certain distance at this time, it is inconvenient for voice input. Of course, the existing Bluetooth headset can be used for voice input, but it is still necessary to press the voice input key in the mobile phone while using the Bluetooth headset; therefore, there are still many inconveniences. There are more and more application programs for terminals at present, and how to use terminal accessories to implement voice input and output for the application programs in the terminal become more and more necessary.

### SUMMARY

In light of this, the embodiments of the present disclosure are expected to provide a voice data transmission processing method, a terminal and a computer storage medium, so as to facilitate voice data transmission.

A first aspect of the embodiments of the present disclosure provides a voice data transmission processing method, wherein the voice data transmission processing method specifically includes the following steps of:
receiving, by a terminal, an instruction sent by a terminal accessory by means of wireless near field communication;
determining a voice data transmission operation corresponding to the instruction in a currently running application program; and
implementing voice data transmission between the terminal and the terminal accessory according to the voice data transmission operation.

Preferably, the instruction includes a voice receiving instruction; the voice receiving instruction specifically includes an instruction for starting voice receiving;
the receiving, by the terminal, the instruction sent by the terminal accessory by means of wireless near field communication is:
receiving, by the terminal, the instruction for starting voice receiving sent by the terminal accessory by means of wireless near field communication;
the determining the voice data transmission operation corresponding to the instruction in the currently running application program is:
   determining an operation corresponding to the instruction for starting voice receiving in the currently running application program to be an operation for starting voice receiving; and
   the implementing the voice data transmission between the terminal and the terminal accessory according to the voice data transmission operation is:
      starting receiving voice data sent by the terminal accessory according to the operation for starting voice receiving.

Preferably, the instruction includes the voice receiving instruction; the voice receiving instruction specifically includes an instruction for ending voice receiving;
the receiving, by the terminal, the instruction sent by the terminal accessory by means of wireless near field communication is:
receiving, by the terminal, the instruction for ending voice receiving sent by the terminal accessory by means of wireless near field communication;
the determining the voice data transmission operation corresponding to the instruction in the currently running application program is:
   determining an operation corresponding to the instruction for ending voice receiving in the currently running application program to be an operation for ending voice receiving; and
   the implementing the voice data transmission between the terminal and the terminal accessory according to the voice data transmission operation is:
      starting receiving voice data sent by the terminal accessory according to the operation for ending voice receiving.

Preferably, after finishing the voice data transmission between the terminal and the terminal accessory according to the voice data transmission operation, the method further includes a step of:
sending the received voice data to other terminal through a communication network.

Preferably, the instruction includes a voice outputting instruction;
the voice data transmission processing method includes:
the receiving, by the terminal, the instruction sent by the terminal accessory by means of wireless near field communication is:
   receiving, by the terminal, the voice outputting instruction sent by the terminal accessory by means of wireless near field communication;
   the determining the voice data transmission operation corresponding to the instruction in the currently running application program is:
      determining an operation corresponding to the voice outputting instruction in the currently running application program to be a voice outputting operation; and
      the implementing the voice data transmission between the terminal and the terminal accessory according to the voice data transmission operation is:
         outputting the voice data in the currently running application program to the terminal accessory according to the voice data outputting instruction.

Preferably, the outputting the voice data in the currently running application program to the terminal accessory includes: outputting the latest voice data in the currently running application program to the terminal accessory.

Preferably, the receiving, by the terminal, the voice outputting instruction sent by the terminal accessory by means of wireless near field communication includes;
receiving a voice data selection instruction sent by the terminal accessory by means of wireless near field communication; and
selecting voice data according to the instruction of the terminal accessory.

Preferably, the receiving, by the terminal, the voice outputting instruction sent by the terminal accessory by means of wireless near field communication includes: receiving, by the terminal, an instruction generated by a user through physical triggering or voice triggering and sent by the terminal accessory by means of wireless near field communication.

A second aspect of the embodiments of the present disclosure further provides a voice data transmission processing terminal, wherein the voice data transmission processing terminal includes:
a receiving module configured to receive an instruction sent by a terminal accessory by means of wireless near field communication;
a determination module configured to determine a voice data transmission operation corresponding to the instruction in a currently running application program; and a transmission module configured to implement voice data transmission between the terminal and the terminal accessory according to the voice data transmission operation.

Preferably, the instruction includes a voice receiving instruction; the voice receiving instruction includes an instruction for starting voice receiving;
the receiving module is configured to receive the instruction for starting voice receiving sent by the terminal accessory by means of wireless near field communication;
the determination module is configured to determine an operation corresponding to the instruction for starting voice receiving in the currently running application program to be an operation for starting voice receiving; and
the transmission module is configured to start receiving voice data sent by the terminal accessory.

Preferably, the instruction includes the voice receiving instruction; the voice receiving instruction includes an instruction for starting voice receiving;
the receiving module is also configured to receive an instruction for ending voice receiving sent by the terminal accessory by means of wireless near field communication;
the determination module is also configured to determine an operation corresponding to the instruction for ending voice receiving in the currently running application program to be an operation for ending voice receiving; and the transmission module is also configured to stop receiving the voice data.

Preferably, the voice data transmission processing terminal further includes:
a processing module configured to send the received voice data to other terminal through a communication network.

Preferably, the receiving module is also configured to receive a voice outputting instruction sent by the terminal accessory by means of wireless near field communication;
the determination module is also configured to determine an operation corresponding to the voice outputting instruction in the currently running application program to be a voice outputting operation; and
the transmission module is also configured to output the voice data in the currently running application program to the terminal accessory.

Preferably, the transmission module is also configured to output the latest voice data in the currently running application program to the terminal accessory.

Preferably, the receiving module is also configured to receive a voice data selection instruction sent by the terminal accessory by means of wireless near field communication; and
the voice data transmission processing terminal further includes:
a selection module configured to select voice data according to the voice data selection instruction.

Preferably, the receiving module is also configured to receive an instruction generated by a user through physical triggering or voice triggering and sent by the terminal accessory by means of wireless near field communication.

A third aspect of the embodiments of the present disclosure provides a computer storage medium, wherein the computer storage medium is stored with a computer-executable instruction, and the computer-executable instruction is configured to perform at least one of the method according to the first aspect to the third aspect.

According to the voice data transmission processing method and terminal, the voice data transmission processing method of the embodiments of the present disclosure specifically includes: receiving, by the terminal, the instruction sent by the terminal accessory by means of wireless near field communication; and after the voice data transmission operation corresponding to the instruction in the currently running application program is determined, implementing voice data transmission between the terminal and the terminal accessory according to the voice data transmission operation. The voice data transmission is controlled by using the terminal accessory, thus a user can implement voice transmission without performing any operation on the terminal, thereby helping the user conveniently use a voice service of an application program of the terminal and improving the user experience.

### BRIEF DESCRIPTION OF THE DRAWINGS

Fig. 1 is a schematic diagram illustrating flows of a voice data transmission processing method provided by a first embodiment of the present disclosure;
Fig. 2 is a schematic diagram illustrating flows of a voice data transmission processing method provided by a second embodiment of the present disclosure;
Fig. 3 is a schematic diagram illustrating flows of a voice data transmission processing method provided by a third embodiment of the present disclosure;
Fig. 4 is a schematic diagram illustrating flows of a voice data transmission processing method provided by a fourth embodiment of the present disclosure;
Fig. 5 is a first structural schematic diagram of a voice data transmission processing terminal provided by a fifth embodiment of the present disclosure;
Fig. 6 is a second structural schematic diagram of the voice data transmission processing terminal provided by the fifth embodiment of the present disclosure; and
Fig. 7 is a third structural schematic diagram of the voice data transmission processing terminal provided by the fifth embodiment of the present disclosure.

### DETAILED DESCRIPTION

Hereinafter, preferred embodiments of the invention will be explained in details with reference to the drawings. It should be understood that the preferred embodiments described hereinafter are to explain and interpret the disclosure only, but are not intended to limit the disclosure.

### First Embodiment

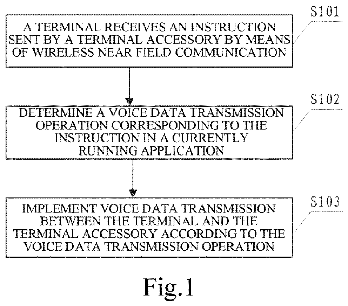

A voice data transmission processing method of the embodiment of the present disclosure, as shown in Fig. 1, includes the following steps.

In S101, a terminal receives an instruction sent by a communication terminal accessory by means of wireless near field communication.

The communication terminal accessory herein is namely the terminal accessory; in the step, it will be appreciated that the terminal is matched and connected with the communication terminal accessory, and can receive an instruction and voice data sent by the terminal accessory by means of wireless near field communication after being connected. The terminal herein includes a mobile phone communication terminal, a mobile computer, and the like. The communication terminal accessory herein includes a bluetooth headset, a portable wearable device, or the like. The wireless near field communication herein includes bluetooth communication, near field communication (Near Field Communication, NFC), and the like. To be specific, a mobile phone and a bluetooth headset are taken as an example for explaining, wherein the mobile phone is matched and connected with the bluetooth headset, and the mobile phone receives an instruction sent by the bluetooth headset after being matched and connected.

In S102, a voice data transmission operation corresponding to the instruction in a currently running application program is determined.

In the step, it will be appreciated that the application program in the terminal is under a running status, and the determining the voice data operation corresponding to the instruction in the currently running application program specifically includes:
presetting a corresponding relationship between the instruction sent by the terminal accessory and the voice data operation of the application program; and determining the corresponding voice data transmission operation according to the instruction and the corresponding relationship.

The application program herein includes electronic navigation, a browser client, a sound recording program, an instant messaging program, or the like, wherein the instant messaging program includes QQ, WeChat, or the like.

To be specific, it is explained by taking the terminal as a mobile phone and the accessory terminal as a bluetooth headset for example. Firstly, a corresponding relationship between a related instruction in the bluetooth headset and a WeChat related voice data operation is established. The mobile phone receives an instruction sent by the bluetooth headset, parses the instruction, and determines a corresponding voice data operation in the currently running application program corresponding to the instruction.

For example, the bluetooth headset is provided with a key corresponding to starting WeChat voice receiving; when the key for starting voice receiving in the bluetooth headset is pressed, the terminal can receive the instruction, parse the instruction, determines a corresponding relationship between the instruction and a WeChat related operation, and then parses and determines that the instruction is an operation for starting WeChat voice receiving.

In S103, voice data transmission between the terminal and the terminal accessory is implemented according to the voice data transmission operation.

In the step, after the terminal receives the instruction sent by the terminal accessory by means of wireless near field communication, and determines the voice data operation in the application program corresponding to the instruction by parsing, the voice data transmission between the terminal and the terminal accessory shall be implemented according to the voice data transmission operation. The voice data transmission between the terminal and the terminal accessory herein may include receiving, by the terminal, the voice data sent by the terminal accessory, and sending, by the terminal, the stored voice data to the terminal accessory. For example, if the terminal receives an instruction sent by the bluetooth headset, and determines the instruction to be an operation for starting WeChat voice receiving by parsing, WeChat voice receiving is started so as to receive the voice data sent by the bluetooth headset.

### Second Embodiment

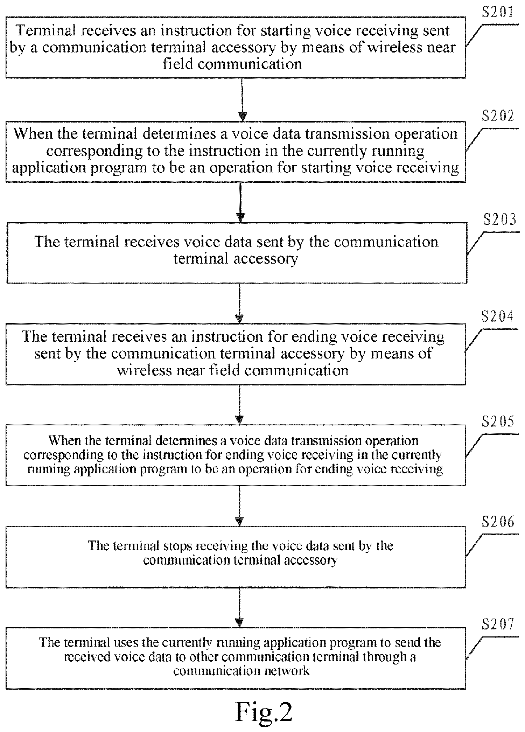

In the embodiment, the instruction in the above-mentioned S101 includes a voice receiving instruction. To be specific, the voice receiving instruction includes an instruction for starting voice receiving and an instruction for ending voice receiving. A concrete implementation manner of the method, as shown in Fig. 2, includes the following steps.

In S201, a terminal receives an instruction for starting voice receiving sent by a communication terminal accessory by means of wireless near field communication.

In S202, the terminal determines a voice data transmission operation corresponding to the instruction in the currently running application program to be an operation for starting voice receiving; the terminal, after performing the operation for starting voice receiving, will also give a corresponding image for prompting to start voice receiving through a terminal screen. For example, when performing an operation for starting WeChat voice receiving, a microphone image will be displayed on the screen. The prompting image is not limited to the microphone image only. To be specific, related settings are performed according to configuration of the terminal and user hobbies.

In S203, the terminal receives the voice data sent by the communication terminal accessory. In S204, the terminal receives an instruction for ending voice receiving sent by the communication terminal accessory by means of wireless near field communication.

In S205, the terminal determines a voice data transmission operation corresponding to the instruction for ending voice receiving in the currently running application program to be an operation for ending voice receiving.

In S206, the terminal stops receiving the voice data sent by the communication terminal accessory.

In S207, the terminal uses the currently running application program to send the received voice data to other communication terminal through a communication network. The communication network in the step includes such networks as 2G, 3G, 4G or WIFI, etc.

To be specific, mobile phone WeChat and a bluetooth headset are taken as examples. A WeChat application program is started in the mobile phone firstly, and the mobile phone is matched with the bluetooth headset to establish connection. After the connection is established, when the bluetooth headset sends an instruction for starting voice receiving, the mobile phone receives the instruction and determines a WeChat operation corresponding to the instruction by parsing; when the instruction operation is determined to be an instruction for starting voice receiving, an operation for starting WeChat voice receiving is started to receive the voice data sent by the bluetooth headset. When the bluetooth headset sends the instruction for starting voice receiving, i.e., after voice input is completed, the mobile phone receives the instruction and determines a WeChat operation corresponding to the instruction by parsing; when the instruction operation is determined to be an instruction for ending voice receiving, an operation for stopping WeChat voice receiving is started to stop receiving the voice data sent by the bluetooth headset. Moreover, the voice data is sent out through WeChat. It will be appreciated that the mobile phone WeChat and the bluetooth headset are only taken as examples herein, the present disclosure is not limited to the mobile phone WeChat and the bluetooth headset only, and all others that can implement this solution shall be included in the present disclosure. For another example, when the bluetooth headset sends an instruction for starting voice receiving, the mobile phone receives the instruction and determines that the instruction corresponds to a mobile phone navigation operation by parsing; when the instruction operation is determined to be an instruction for starting voice receiving, an operation for starting voice receiving of mobile phone navigation is started to receive the voice data sent by the bluetooth headset. When the bluetooth headset sends the instruction for starting voice receiving, i.e., after voice input is completed, the mobile phone receives the instruction and determines that the instruction corresponds to a mobile phone navigation operation by parsing; when the instruction operation is determined to be an instruction for ending voice receiving, an operation for stopping voice receiving of mobile phone navigation is started to stop receiving the voice data sent by the bluetooth headset, and a related operation is performed according to the received voice. For example, the received voice is "Beijing", then the mobile phone will search lines to Beijing automatically and notify related information to the user. In this way, the user can perform a voice control operation conveniently while driving a car without needing to perform the related operation on the mobile phone by hands. Similarly, a mobile phone browser searching operation may be performed to notify related voice data needed to be searched to the mobile phone browser through the bluetooth headset, and then the mobile phone browser receives the voice data to perform related searching; in this way, voice data input for controlling the mobile phone browser by hands is avoided, which is more convenient to operate. Similarly, a related operation to sound recording software and an operation to a voice file in an email may be performed, for example, reading the voice file in the email or inputting the voice data to generate the voice file of the email. It should be appreciated that any control for voice data inputting by hands can be implemented through the method according to the embodiments of the present disclosure to perform related speech transmission control using the terminal accessory; in this way, people can use voice services more conveniently when doing other things.

### Third Embodiment

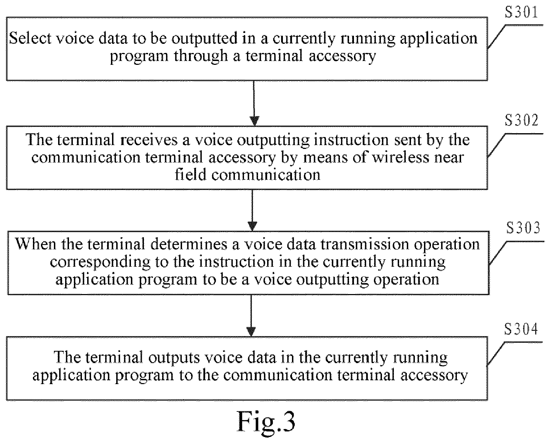

In the embodiment, the instruction in the above-mentioned S101 includes a voice outputting instruction. A concrete implementation manner of the method, as shown in Fig. 3, includes the following steps.

In S301, voice data to be outputted in a currently running application program is selected through a terminal accessory; in the step, it will be appreciated that a user triggers related instructions in the terminal accessory, a terminal receives these instructions and selects voice data to be played in the running application program according to these instructions.

In S302, the terminal receives a voice outputting instruction sent by the communication terminal accessory by means of wireless near field communication.

In S303, the terminal determines a voice data transmission operation corresponding to the instruction in the currently running application program to be a voice outputting operation.

In S304, the terminal outputs voice data in the currently running application program to the communication terminal accessory.

For ease of better use, latest voice data may be selected by default since people will generally listen to the unprocessed latest voice data. It will be appreciated that when the voice outputting instruction is received, the terminal will select the latest voice data in the application program automatically and output it to the communication terminal accessory. Voice inputted by the user is collected to form voice data; a collection time is corresponding to a formation time usually; and the latest voice data may be voice data having the latest formation time.

To be specific, taking the application program as mobile phone WeChat and the terminal accessory as a bluetooth headset for example, when the mobile phone WeChat receives a voice sent by other WeChat, a bluetooth headset selection instruction is utilized to select a voice to be read, and then a bluetooth headset output instruction is utilized to output the voice to the bluetooth headset. Further, the currently latest voice data may be selected to output by default since the latest received voice is expected to be read usually.

It is noteworthy that the instruction in the embodiment of the present disclosure includes an instruction generated by the terminal accessory according to physical triggering or voice triggering by a user, and other realizable instructions that can implement control shall all fall within the solution protected by the embodiment of the present disclosure. The physical triggering includes ON-OFF triggering and key triggering. The ON-OFF triggering may include setting an on-off key, wherein triggering and enabling the "ON" of the ON-OFF key represents an instruction for starting voice receiving; while triggering and enabling the OFF of the ON-OFF key represents an instruction for ending voice receiving. The ON-OFF instruction is also used for representing whether to perform a voice outputting instruction on the voice data, for example, triggering and enabling the "ON" of the ON-OFF key represents a voice outputting instruction. The ON-OFF instruction is also used for representing a voice data selection instruction, for example, triggering and enabling the "ON" of the ON-OFF key represents selecting a latest voice data instruction by default. Similarly, the key triggering may include that pressing the key represents an instruction for starting voice receiving, while releasing the key represents an instruction for ending voice receiving. Pressing the key for a certain time may be set to represent various instructions, for example, pressing the key for 1s represents an instruction for starting voice receiving; pressing the key for 2s represents an instruction for ending receiving; pressing the key for 3s represents a voice outputting instruction, or the like. For example, it may also be that pressing a designated key once represents an instruction for starting voice receiving; continuously pressing the designated key twice represents an instruction for ending receiving; and continuously pressing the designated key thrice represents a voice outputting instruction, or the like. The present disclosure is not limited to the above-mentioned manners and corresponding instructions only, and may be set specifically according to user hobbies. The voice triggering herein includes presetting a voice input instruction, and specifically includes setting keywords to perform corresponding instructions, for example, "voice starting" represents an instruction for starting voice receiving; "voice ending" represents an instruction for ending receiving; "voice outputting" represents a voice outputting instruction; and "voice selecting" represents a voice data selection instruction, or the like. The preset voice instructions are not limited to the above-mentioned manners, and may be set specifically according to the user hobbies.

### Fourth Embodiment

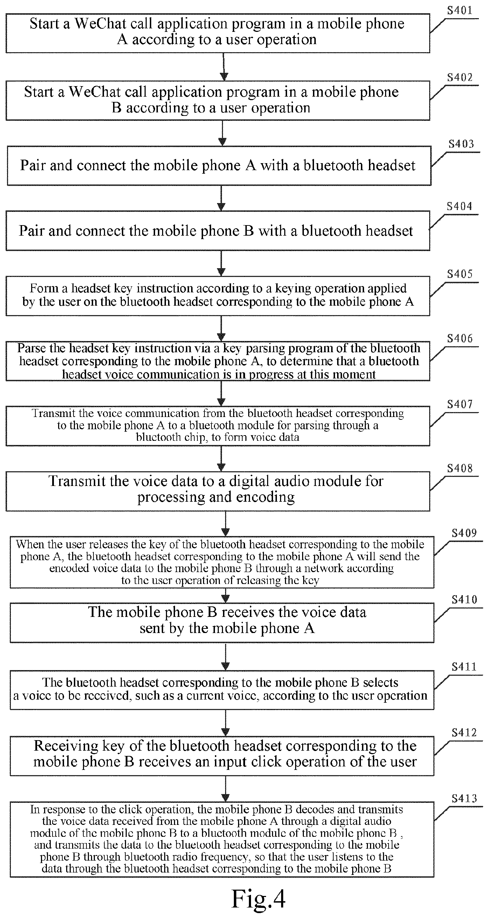

To preferably illustrate the present disclosure, the bluetooth headset voice communication is explained in details using the voice communication performed at WeChat of a mobile phone terminal, as shown in Fig. 4, including the following steps.

In S401, a WeChat call application program of a mobile phone A is started according to a user operation.

In S402, a WeChat call application program of a mobile phone B is started according to a user operation.

In S403, the mobile phone A is paired and connected with a bluetooth headset; and if the pairing is unsuccessful, this operation is declared to be failed.

In S404, the mobile B is paired and connected with a bluetooth headset; and if the pairing is unsuccessful, this operation is declared to be failed.

In S405, a headset key instruction is formed according to a keying operation applied by the user on the bluetooth headset corresponding to the mobile phone A.

In S406, the headset key instruction is parsed according to a key parsing program of the bluetooth headset corresponding to the mobile phone A, to determine that a bluetooth headset voice communication is in progress at this moment.

In S407, the voice communication is transmitted to a bluetooth module for parsing through a bluetooth chip from the bluetooth headset corresponding to the mobile phone A, to form voice data.

In S408, the voice data is then transmitted to a digital audio module for processing and encoding.

In S409, when the user releases a key of the bluetooth headset corresponding to the mobile phone A, the bluetooth headset corresponding to the mobile phone A will send the encoded voice data to the mobile phone B through a network according to the user operation of releasing the key.

In S410, the mobile phone B receives the voice data sent by the mobile phone A.

In S411, the bluetooth headset corresponding to the mobile phone B selects a voice to be received, such as a current voice, according to the user operation.

In S412, an input click operation of the user is received by a receiving key of the bluetooth headset corresponding to the mobile phone B.

In S413, the mobile phone B decodes and transmits the voice data received from the mobile phone A through a digital audio module of the mobile phone B to a bluetooth module of the mobile phone B in response to the click operation, and transmits the data to the bluetooth headset corresponding to the mobile phone B through bluetooth radio frequency, so that the user listens to the data through the bluetooth headset corresponding to the mobile phone B.

### Fifth Embodiment

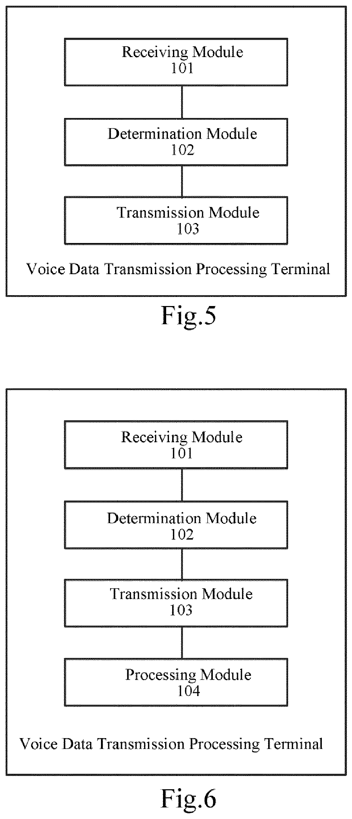

The present disclosure also provides a voice data transmission processing terminal. Preferably, the terminal may be a mobile terminal. Preferably, the mobile communication terminal is a mobile phone. As shown in Fig. 5, the terminal includes a receiving module 101, a determination module 102 and a transmission module 103. The receiving module 101 is configured to receive an instruction sent by a communication terminal accessory by means of wireless near field communication; the determination module 102 is configured to determine a voice data transmission operation corresponding to the instruction in a currently running application program; and the transmission module 103 is configured to achieve voice data transmission between the terminal and the terminal accessory according to the voice data transmission operation.

In the embodiment, the receiving module 101 is configured to receive a voice receiving instruction sent by the terminal accessory by means of wireless near field communication, wherein the voice receiving instruction includes an instruction for starting voice receiving and an instruction for ending voice receiving; when the receiving module 101 receives the instruction for starting voice receiving sent by the terminal accessory by means of wireless near field communication, the determination module 102 is configured to determine an operation corresponding to the instruction for starting voice receiving in the currently running application program to be an operation for starting voice receiving; and the transmission module 103 is configured to start receiving voice data sent by the terminal accessory; and when the receiving module 101 receives the instruction for ending voice receiving sent by the terminal accessory by means of wireless near field communication, the determination module 102 is also configured to determine the operation corresponding to the instruction for ending voice receiving in the currently running application program to be an operation for ending voice receiving; and the transmission module is also configured to stop receiving the voice data.

As shown in Fig. 6, the voice data transmission processing terminal further includes a processing module 104, wherein the processing module 104 is configured to use the currently running application program to send the received voice data to other terminal through a communication network.

In the embodiment, the receiving module 101 is configured to receive a voice outputting instruction sent by the terminal accessory by means of wireless near field communication; when the receiving module 101 receives the voice outputting instruction sent by the terminal accessory by means of wireless near field communication, the determination module 102 is also configured to determine the operation corresponding to the voice outputting instruction in the currently running application program to be a voice outputting operation; and the transmission module 103 is also configured to output the voice data in the currently running application program to the terminal accessory.

In the embodiment, the transmission module 103 is also configured to output the latest voice data in the currently running application program to the terminal accessory.

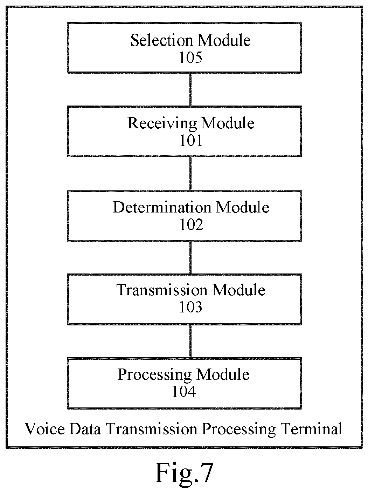

As shown in Fig. 7, the receiving module 101 is also configured to receive a voice data selection instruction sent by the terminal accessory; the voice data transmission processing terminal further includes a selection module 105, wherein the selection module 105 is configured to select the voice data according to the voice data selection instruction sent by the terminal accessory. It can be understood that the processing module 104 may also be configured to receive the voice data sent by other terminal through a network, and the selection module 105 is configured to select the voice data needing to be outputted.

In the embodiment, the receiving module 101 is also configured to receive an instruction generated by the terminal accessory according to physical triggering or voice triggering by a user and sent by the terminal accessory by means of wireless near field communication.

In the embodiment, a specific structure of the receiving module 101 may include a receiving interface, for example, a wired or wireless receiving interface; and for a specific example, a bluetooth receiving antenna, or the like.

A specific structure of the determination module 102 may include a processor and a storage medium; the processor is connected with the storage medium through a bus; the storage medium is stored with a computer-executable instruction; and the processor reads and performs the computer-executable instruction, and can implement functions of the determination module 102.

A specific structure of the transmission module 103 may be corresponding to a sending interface, such as a sending antenna, and specifically such as a bluetooth sending antenna.

The embodiments of the present disclosure also record a computer storage medium, wherein the computer storage medium is stored with a computer-executable instruction, and the computer-executable instruction is configured to perform at least one of the methods according to the foregoing embodiments, like the method shown in Fig. 1 specifically. The computer storage medium may be a read-only memory, a magnetic disk or an optical disk, or the like, and is preferably a non-transitory storage medium.

The above is merely preferred embodiments of the present disclosure, but is not intended to limit the protection scope of the present disclosure. Any modifications figured out according to the principle of the present disclosure shall all be understood to fall within the protection scope of the present disclosure.

### INDUSTRIAL APPLICABILITY

In the embodiments of the present disclosure, the terminal receives the instruction sent by the terminal accessory by means of wireless near field communication, determines the voice data transmission operation to be executed according to the instruction, and performs the voice data transmission operation. The user controls the voice data transmission operation of the terminal through the terminal accessory, so that the inconvenience of the prior art which can only control the voice data transmission through controlling the terminal is solved, and the convenience of the user in a communication process is improved.

## Claims

1. A voice data transmission processing method, comprising:
receiving, by a terminal, an instruction sent by a terminal accessory by means of wireless near field communication;
determining a voice data transmission operation corresponding to the instruction in a currently running application program; and
implementing voice data transmission between the terminal and the terminal accessory according to the voice data transmission operation.

2. The voice data transmission processing method according to claim 1, wherein the instruction comprises a voice receiving instruction; the voice receiving instruction comprises an instruction for starting voice receiving;
the receiving, by the terminal, the instruction sent by the terminal accessory by means of wireless near field communication is:
receiving, by the terminal, the instruction for starting voice receiving sent by the terminal accessory by means of wireless near field communication;
the determining the voice data transmission operation corresponding to the instruction in the currently running application program is:
determining an operation corresponding to the instruction for starting voice receiving in the currently running application program to be an operation for starting voice receiving; and
the implementing the voice data transmission between the terminal and the terminal accessory according to the voice data transmission operation is:
starting receiving voice data sent by the terminal accessory according to the operation for starting voice receiving.

3. The voice data transmission processing method according to claim 2, wherein
the instruction comprises the voice receiving instruction; the voice receiving instruction comprises an instruction for ending voice receiving;
the receiving, by the terminal, the instruction sent by the terminal accessory by means of wireless near field communication is:
receiving, by the terminal, the instruction for ending voice receiving sent by the terminal accessory by means of wireless near field communication;
the determining the voice data transmission operation corresponding to the instruction in the currently running application program is:
determining an operation corresponding to the instruction for ending voice receiving in the currently running application program to be an operation for ending voice receiving; and
the implementing the voice data transmission between the terminal and the terminal accessory according to the voice data transmission operation is:
stopping receiving the voice data sent by the terminal accessory according to the operation for ending voice receiving.

4. The voice data transmission processing method according to claim 2, wherein
after finishing the voice data transmission between the terminal and the terminal accessory according to the voice data transmission operation, the method further comprises:
sending the received voice data to other terminal through a communication network.

5. The voice data transmission processing method according to claim 1, wherein the instruction comprises a voice outputting instruction; and
the voice data transmission processing method comprises:
the receiving, by the terminal, the instruction sent by the terminal accessory by means of wireless near field communication is:
receiving, by the terminal, the voice outputting instruction sent by the terminal accessory by means of wireless near field communication;
the determining the voice data transmission operation corresponding to the instruction in the currently running application program is:
determining an operation corresponding to the voice outputting instruction in the currently running application program to be a voice outputting operation; and
the implementing the voice data transmission between the terminal and the terminal accessory according to the voice data transmission operation is:
outputting the voice data in the currently running application program to the terminal accessory according to the voice data outputting instruction.

6. The voice data transmission processing method according to claim 5, wherein
the outputting the voice data in the currently running application program to the terminal accessory comprises: outputting the latest voice data in the currently running application program to the terminal accessory.

7. The voice data transmission processing method according to claim 5, wherein
the receiving, by the terminal, the instruction sent by the terminal accessory by means of wireless near field communication comprises:
receiving a voice data selection instruction sent by the terminal accessory by means of wireless near field communication; and
the method further comprises: selecting voice data according to the voice data selection instruction.

8. The voice data transmission processing method according to any one of claims 1 to 7, wherein the receiving, by the terminal, the instruction sent by the terminal accessory by means of wireless near field communication comprises: receiving, by the terminal, an instruction generated according to physical triggering or voice triggering by a user and sent by the terminal accessory by means of wireless near field communication.

9. A voice data transmission processing terminal, comprising:
a receiving module configured to receive an instruction sent by a terminal accessory by means of wireless near field communication;
a determination module configured to determine a voice data transmission operation corresponding to the instruction in a currently running application program; and
a transmission module configured to implement voice data transmission between the terminal and the terminal accessory according to the voice data transmission operation.

10. The voice data transmission processing terminal according to claim 9, wherein
the instruction comprises a voice receiving instruction; the voice receiving instruction comprises an instruction for starting voice receiving;
the receiving module is configured to receive the instruction for starting voice receiving sent by the terminal accessory by means of wireless near field communication;
the determination module is configured to, when the receiving module receives the instruction for starting voice receiving sent by the terminal accessory by means of wireless near field communication, determine an operation corresponding to the instruction for starting voice receiving in the currently running application program to be an operation for starting voice receiving; and
the transmission module is configured to start receiving voice data sent by the terminal accessory according to the operation for starting voice receiving.

11. The voice data transmission processing terminal according to claim 9, wherein
the instruction comprises the voice receiving instruction; the voice receiving instruction comprises an instruction for ending voice receiving;
the receiving module is configured to receive the instruction for ending voice receiving sent by the terminal accessory by means of wireless near field communication;
the determination module is also configured to determine an operation corresponding to the instruction for ending voice receiving in the currently running application program to be an operation for ending voice receiving; and
the transmission module is also configured to stop receiving the voice data according to the operation for ending voice receiving.

12. The voice data transmission processing terminal according to claim 11, wherein the voice data transmission processing terminal further comprises:
a processing module configured to send the received voice data to other terminal through a communication network.

13. The voice data transmission processing terminal according to claim 10, wherein
the receiving module is also configured to receive a voice outputting instruction sent by the terminal accessory by means of wireless near field communication;
the determination module is also configured to determine an operation corresponding to the voice outputting instruction in the currently running application program to be a voice outputting operation; and
the transmission module is also configured to output the voice data in the currently running application program to the terminal accessory according to the voice outputting operation.

14. The voice data transmission processing terminal according to claim 13, wherein
the transmission module is also configured to output the latest voice data in the currently running application operation to the terminal accessory.

15. The voice data transmission processing terminal according to claim 12, wherein
the receiving module is also configured to receive a voice data selection instruction sent by the terminal accessory by means of wireless near field communication; and
the voice data transmission processing terminal further comprises:
a selection module configured to select voice data according to the voice data selection instruction.

16. The voice data transmission processing terminal according to any one of claims 9 to 15, wherein the receiving module is also configured to receive an instruction generated according to physical triggering or voice triggering by a user and sent by the terminal accessory by means of wireless near field communication.

17. A computer storage medium, wherein the computer storage medium is stored with a computer-executable instruction, and the computer-executable instruction is configured to perform at least one of the methods according to claims 1 to 9.
